# EUROPÄISCHE PATENTSCHRIFT

(11) **EP 2 742 791 B1**
(45) Veröffentlichungstag und Bekanntmachung des Hinweises auf die Patenterteilung: **15.01.2020**
(21) Anmeldenummer: 13192623.0
(22) Anmeldetag: 13.11.2013
(51) Int. Cl.: A01D 41/127

(54) **Verfahren und Anordnung zur Optimierung eines Betriebsparameters eines Mähdreschers**
Method and device for optimising an operating parameter of a combine harvester
Procédé et dispositif d'optimisation d'un paramètre de fonctionnement d'une moissonneuse-batteuse

(30) Priorität: 17.12.2012 DE 102012223434
(43) Veröffentlichungstag der Anmeldung: 18.06.2014
(73) Patentinhaber: Deere & Company, Moline, IL 61265 (US)
(72) Erfinder: Bischoff, Lutz, 66989 Nuenschweiler (DE)
(74) Vertreter: Holst, Sönke

(56) Entgegenhaltungen:
- EP-A1- 1 297 733
- EP-A1- 1 736 044
- EP-A2- 2 057 882
- US-A- 6 119 442

## Beschreibung

Die Erfindung betrifft ein Verfahren und eine Anordnung zur Optimierung eines Betriebsparameters eines Mähdreschers.

### Stand der Technik

Mähdrescher dienen in der Landwirtschaft zur Ernte von Körner enthaltenden Früchten, wie Weizen oder Mais, von einem Feld. Beim Erntebetrieb werden die Pflanzen abgeschnitten oder aufgenommen. Durch eine Drescheinrichtung und eine Trenneinrichtung werden die Körner von den verbleibenden Erntegutresten (insbesondere Stroh) getrennt. Eine Reinigungseinrichtung trennt die Körner dann von kleineren Erntegutresten, wie Strohbruchstücken und Kaff. Schließlich werden die Körner in einem Korntank zwischengespeichert und auf ein Transportfahrzeug überladen.

Bei einem Mähdrescher sind durch den Bediener verschiedene Betriebsparameter vorzugeben, wie die Vortriebsgeschwindigkeit, Einstellungen der Drescheinrichtung (Drehzahl, Dreschspalt) und Einstellungen der Reinigungseinrichtung (Gebläsedrehzahl, Sieböffnungsgröße). Die Vortriebsgeschwindigkeit definiert den Erntegutdurchsatz durch den Mähdrescher, der einerseits nicht zu klein sein sollte, um die Kapazität des Mähdreschers möglichst gut auszunutzen, andererseits aber auch nicht zu groß sein darf, da dann die (in der Regel exponentiell vom Durchsatz abhängenden) Verluste, d.h. die Menge der vom Mähdrescher rückseitig mit den Erntegutresten auf das Feld abgegebenen Körner, übermäßig anwachsen. Zur Einstellung der Vortriebsgeschwindigkeit dienen dem Bediener üblicherweise Verlustkornsensoren, die zur Erfassung der Verlustkörner stromab der Reinigungseinrichtung und der Trenneinrichtung angeordnet sind. Derartige Verlustkornsensoren umfassen in der Regel Prallplatten, an denen beim Aufprall von Verlustkörnern Schwingungen entstehen, die durch einen Schwingungssensor erfasst und mittels einer Nachweiselektronik nachgewiesen werden und zur Ansteuerung einer Anzeigeeinrichtung für den Bediener dienen. Hierzu sei auf die Offenbarung der DE 40 35 470 C2 verwiesen.

Die gebräuchlichen Verlustkornsensoren haben jedoch den Nachteil, dass sie regelmäßig zu kalibrieren sind, um hinreichend genaue Werte anzeigen zu können, denn die Verlustkörner erzeugen bei unterschiedlichen Umgebungsbedingungen, wie Temperatur und Feuchte, unterschiedliche Schwingungen der Prallplatten. Zudem gelangt nur ein geringer Anteil der Verlustkörner tatsächlich auf die Verlustkornsensoren. Die übrigen Verlustkörner sind im Stroh oder Kaff eingebettet. Bei wechselnden Erntebedingungen ändert sich der Anteil der Körner, die auf den Verlustkornsensor gelangen. Somit hängen die erzeugten Schwingungen auch von der Erntegutart und auch vom jeweiligen Durchsatz ab.

Der Bediener des Mähdreschers führt somit im Stand der Technik folgende Schritte durch, um den Verlustkornsensoren zu kalibrieren: Er fährt den Mähdrescher mit einer bestimmten, konstanten Geschwindigkeit über das Feld, bis sich der Verarbeitungsprozess innerhalb des Mähdreschers stabilisiert hat. Dann wird der auf der Anzeigeeinrichtung angezeigte Verlustwert notiert oder abgespeichert und eine Prüfschale (DE 100 62 114 C2, EP 1 736 044 A1) abgeworfen, woraufhin der Mähdrescher angehalten wird und der Fahrer von seinem Arbeitsplatz absteigt, um die in der Prüfschale enthaltenen Körner zu zählen. In vielen Fällen erfolgt dieser Vorgang auch ohne Prüfschale und der Bediener zählt die innerhalb einer bestimmten Fläche des Bodens liegenden Körner. Die Anzahl der Verlustkörner wird dann in einen separaten Rechner eingegeben, um die auf den Durchsatz bezogenen, relativen Verluste in Prozenten zu bestimmen, oder diese werden anhand der gezählten Verlustkörner aus einer Tabelle ausgelesen. Diese relativen Verluste dienen dann zur Kalibrierung des Verlustkornsensors. In der Regel ist dieser Vorgang mehrmals durchzuführen, bis eine Geschwindigkeit gefunden ist, bei der sich ein sinnvoller Kompromiss zwischen der Durchsatzleistung und akzeptablen Verlusten ergibt. Schließlich wird der Mähdrescher manuell oder selbsttätig mit einer dem gefundenen Verlustwert (bzw. dem dazu zugehörigen Durchsatz, vgl. EP 1 243 173 A1) entsprechenden Geschwindigkeit gefahren, sodass bei dichten Beständen langsamer und dünnen Beständen schneller gefahren werden kann.

Ähnliche Vorgänge sind auch für die Dreschwerks- und Reinigungseinstellungen durchzuführen, wozu schon Automatisierungen vorgeschlagen wurden (EP 1 297 733 A1, EP 1 371 278 A2), bei denen der Bediener seine Einschätzung des Prozessergebnisses bei unterschiedlichen Betriebsparameters in einen Bordrechner eingibt und darauf basierend eine selbsttätige Optimierung des Prozesses erfolgt.

### Aufgabe der Erfindung

Der oben beschriebene Kalibriervorgang für den Verlustkornsensoren ist mehrmals täglich zu wiederholen, was sich als recht zeitaufwändig erweist, weshalb er in vielen Fällen nur selten oder nie durchgeführt wird. Somit arbeitet der Mähdrescher nicht immer mit optimalen Betriebsparametern, wodurch entweder hohe Verluste entstehen oder seine Kapazität nicht optimal genutzt wird.

Die der Erfindung zu Grunde liegende Aufgabe wird darin gesehen, eine gegenüber dem Stand der Technik verbesserte Vorgehensweise zur Optimierung eines Betriebsparameters eines Mähdreschers und eine entsprechende Anordnung aufzuzeigen.

### Lösung

Diese Aufgabe wird erfindungsgemäß durch die Lehre der Patentansprüche 1 und 10 gelöst, wobei in den weiteren Patentansprüchen Merkmale aufgeführt sind, die die Lösung in vorteilhafter Weise weiterentwickeln.

Ein erfindungsgemäßes Verfahren zur Optimierung eines Betriebsparameters eines Mähdreschers umfasst folgende Schritte:
(a) der Mähdrescher wird mit zumindest etwa konstanter Geschwindigkeit und/oder konstantem Durchsatz über ein Feld gefahren, zumindest bis sich ein Verarbeitungsprozess des Mähdreschers stabilisiert hat;
(b) Daten hinsichtlich wenigstens eines Sensorwerts für einen Parameter des Verarbeitungsprozesses im Mähdrescher und der zugehörigen Position des Mähdreschers werden erfasst und in einer Verarbeitungseinheit abgespeichert;
(c) die Daten hinsichtlich der Position werden auf ein mit einer Kamera und einer Positionsbestimmungseinrichtung ausgestattetes Handgerät übertragen;
(d) das Handgerät wird an die Position verbracht und es wird ein Bild des Feldbodens mit der Kamera aufgenommen;
(e) das aufgenommene Bild wird bearbeitet, um eine Eigenschaft des Bildes zu bestimmen;
(f) anhand des Sensorwerts und der ermittelten Eigenschaft wird durch die Verarbeitungseinheit ein Kalibrierwert bestimmt;
(g) und ein Betriebswerts des Mähdreschers wird anhand aktueller Sensorwerte und des Kalibrierwertes durch die Verarbeitungseinheit berechnet und angezeigt und/oder selbsttätig eingestellt.

Demnach werden Daten hinsichtlich der Position des Mähdreschers abgespeichert, an welcher er (selbsttätig oder durch entsprechende Kontrolle eines Bedieners) mit konstanter Geschwindigkeit bzw. mit konstantem Durchsatz über ein Feld fährt und sich der Verarbeitungsprozess im Mähdrescher stabilisiert hat. Eine Verarbeitungseinheit speichert fernerhin mindestens einen Sensorwert für einen Parameter des Verarbeitungsprozesses im Mähdrescher ab. Die erwähnten Positionsdaten werden drahtlos, insbesondere über eine Mobilfunkverbindung oder ein drahtloses lokales Netzwerk oder über eine Bluetooth-Verbindung oder mittels einer tragbaren Speicherkarte, an ein tragbares Handgerät mit einer Positionsbestimmungseinrichtung und einer Kamera übermittelt, bei dem es sich insbesondere um ein so genanntes Smartphone oder einen Tablet-Computer handeln kann. Nun begibt sich eine Person, sei es der Bediener des Mähdreschers oder eine Hilfsperson, an die abgespeicherte Position, die auf dem Handgerät angezeigt wird, und macht mit der Kamera ein Bild vom Feldboden. Dieses Bild wird verarbeitet, um eine Eigenschaft des Bildes zu bestimmen, die anschließend von der Verarbeitungseinheit des Mähdreschers genutzt wird, um anhand des abgespeicherten Sensorwerts und der Eigenschaft einen Kalibrierwert zu bestimmen. Dieser Kalibrierwert repräsentiert eine Relation zwischen dem im Schritt (b) erfassten Sensorwert für einen Parameter des Verarbeitungsprozesses im Mähdrescher und einem im Schritt (e) ermittelten Parameter. Bei dem Kalibrierwert kann es sich beispielsweise um ein Verhältnis (oder eine Kurve, Tabelle, Gleichung) zwischen mit einem Verlustkornsensor erfassten und real auf dem Feldboden erfassten Verlusten handeln.

Im nachfolgenden Erntebetrieb des Mähdreschers wird der gewonnene Kalibrierwert schließlich dazu benutzt, um anhand aktueller Sensorwerte einen Betriebswert des Mähdreschers selbsttätig einzustellen oder den Betriebswert zu Zwecken der Information bzw. manueller Einstellung durch den Bediener anzuzeigen. Der aktuelle Sensorwert wird somit im Schritt (g) unter Verwendung des Kalibrierwerts korrigiert bzw. in einen genaueren Wert umgerechnet. Dieser genauere Wert wird zur Bestimmung des Betriebswertes genutzt oder ist bereits der Betriebswert. Bei diesem Betriebswert kann es sich um einen beim Betrieb einstellbaren Wert des Mähdreschers, z.B. Geschwindigkeit oder Durchsatz, oder um einen ein Ergebnis des Betriebs des Mähdreschers repräsentierenden Wert, z.B. die Verluste, handeln. Somit wird durch das erfindungsgemäße Verfahren unter Verwendung des aufgefundenen Kalibrierwertes ein Betriebsparameter des Mähdreschers optimiert. Dieser Betriebsparameter kann der manuell oder automatisch eingestellte Betriebswert des Mähdreschers sein. Alternativ oder zusätzlich liegt dem Bediener eine exaktere Anzeige des Wertes für das Ergebnis des Betriebs des Mähdreschers vor, worauf basierend er einen einstellbaren Betriebsparameter (insbesondere Geschwindigkeit oder Durchsatz) des Mähdreschers nunmehr basierend auf genaueren Informationen und somit ebenfalls exakter steuern kann.

Durch die Verwendung des Handgeräts wird der Prozess der Erfassung des Bildes und die Ableitung der Eigenschaft gegenüber dem Stand der Technik wesentlich vereinfacht, denn die Person wird durch das Positionsbestimmungssystem und eine geeignete Anzeige des Handgeräts unproblematisch und fehlerlos an die richtige Stelle für die Aufnahme des Felds geleitet. Zusätzlich wird die Erfassung der gesuchten Eigenschaft zumindest teilweise automatisiert und erleichtert, denn ein manuelles Auszählen von Körnern am Feldboden oder in einer Prüfschale entfällt.

Die Schritte (a) und (b) einerseits und (c) bis (f) andererseits werden vorzugsweise jeweils bei unterschiedlichen Geschwindigkeiten und/oder Durchsätzen wiederholt. Dabei werden zweckmäßigerweise zunächst die Schritte (a) und (b) mehrmals nacheinander bei unterschiedlichen, in der Regel sukzessive ansteigenden Geschwindigkeiten durchgeführt. Erst anschließend erfolgen die Schritte (c) bis (f) für mehrere Positionen, wobei die Schritte (c) und (f) jeweils für mehrere Positionen quasi gleichzeitig erfolgen können. Schließlich liegen der Verarbeitungseinheit des Mähdreschers mehrere Kalibrierwerte vor, die zur Erzeugung einer Kalibrierkurve verwendet werden können, um den Schritt (g) hinreichend präzise auch für zwischen den Datenpunkten liegende Sensorwerte durchführen zu können.

Der Sensorwert bezieht sich insbesondere auf Körnerverluste und/oder den Durchsatz des Mähdreschers. Die erfasste Eigenschaft des Bildes ist dann bevorzugt die Anzahl an Verlustkörnern auf einer bestimmten Fläche des Feldes. Es wäre jedoch auch denkbar, dass sich der Sensorwert auf eine Einstellung einer Drescheinrichtung des Mähdreschers, z.B. den Dreschspalt oder die Dreschtrommeldrehzahl bezieht und die Eigenschaft des Bildes der Bruchkornanteil ist.

Der Schritt (e) kann im Handgerät oder in der Verarbeitungseinheit stattfinden. Findet er im Handgerät statt, wird die ermittelte Eigenschaft drahtlos oder über eine transportable Speicherkarte vom Handgerät an die Verarbeitungseinheit übersandt. Analog wird das von der Kamera aufgenommene Bild drahtlos vom Handgerät an die Verarbeitungseinheit übersandt, falls dort der Schritt (e) stattfindet. Der Schritt (e) kann komplett selbsttätig durch ein Bildverarbeitungssystem oder unter Einbeziehung von Bedienereingaben stattfinden, wobei im letztgenannten Fall ein beispielsweise ein Bediener auf einer berührungsempfindlichen Anzeige des Handgeräts bzw. der Verarbeitungseinheit relevante Bildteile (d.h. Verlustkörner) markieren kann. Die Anzahl der Markierungen wird dann durch einen Prozessor des Handgeräts oder die Verarbeitungseinheit erfasst.

Im Schritt (g) können die Messwerte eines zusätzlichen Sensors zur Erfassung von einer Umgebungsgröße und gelernte oder vorgegebene Auswirkungen der Umgebungsgröße auf die Sensorwerte berücksichtigt werden. So kann beispielsweise die Umgebungstemperatur und die Luftfeuchtigkeit erfasst werden. Der Verarbeitungseinheit liegen von ihr im Laufe der Zeit bei der Anwendung der Vorgehensweise nach der vorliegenden Erfindung gelernte oder werksseitig abgespeicherte Informationen vor, welche Auswirkungen diese Umgebungsgröße(n) auf die vom Sensor erfassten Parameter hat oder haben. So werden beispielsweise Körner bei höherer Luftfeuchtigkeit weicher als bei trockener Luft, was dazu führt, dass sie leisere Aufprallsignale auf der Prallplatte eines Verlustkornsensors erzeugen. Diese Informationen werden im Schritt (g) dazu genutzt, die jeweiligen Messwerte des Sensors zu korrigieren, wobei im Schritt (f) und/oder (g) auch die bei Durchführung des Schritts (b) herrschenden Messwerte des zusätzlichen Sensors berücksichtigt werden können. Analog können im Schritt (g) auch andere, die Sensorwerte beeinflussende Betriebswerte des Mähdreschers berücksichtigt werden.

Die erwähnte Berücksichtigung der Auswirkung erfasster Umweltbedingungen und/oder Betriebswerte des Mähdreschers bei der Auswertung der Sensorwerts für den Parameter des Verarbeitungsprozesses kann selbstverständlich auch unabhängig von der Kalibrierung der Schritte (a) bis (g) verwendet werden, beispielsweise indem die Verarbeitungseinheit im Schritt (g) einen auf beliebige andere Weise gewonnenen oder (unter Fortfall der Schritte (a) bis (f) fest abgespeicherten Zusammenhang zwischen den aktuellen und korrigierten Sensorwerten verwendet und die korrigierten Sensorwerte anhand erfasster Umweltbedingungen und/oder Betriebswerte des Mähdreschers kompensiert. Bei den Merkmalen der Ansprüche 7 bis 9 handelt es sich demnach um Erfindungen, denen selbstständiger erfinderischer Rang zukommt und die in einer Teilanmeldung verfolgt werden können.

Eine erfindungsgemäße Anordnung zur Optimierung eines Betriebsparameters eines Mähdreschers umfasst einen Mähdrescher, der einen Sensor zur Erfassung eines Parameter des Verarbeitungsprozesses im Mähdrescher, eine Positionsbestimmungseinrichtung zur Bestimmung der Position des Mähdreschers, eine mit dem Sensor und der Positionsbestimmungseinrichtung verbundene Verarbeitungseinheit sowie eine Sende- und Empfangseinrichtung aufweist. Außerdem gehört zu dieser Anordnung ein Handgerät, das eine Sende- und Empfangseinrichtung, eine Positionsbestimmungseinrichtung und eine Kamera aufweist. Der Mähdrescher und das Handgerät sind eingerichtet, das oben beschriebene Verfahren durchzuführen.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine schematische Ansicht eines Handgeräts
- Fig. 3: ein Flussdiagramm, nach dem die Kalibrierung der Verlustkornsensoren des Mähdreschers erfolgt,
- Fig. 4: eine Kalibrierkurve für die Verlustkornsensoren, wie sie durch die Vorgehensweise der Figur 3 erzeugbar ist, und
- Fig. 5: eine Kalibrierkurve den Zusammenhang zwischen auf dem Feld gemessenen Verlusten und dem Durchsatz.

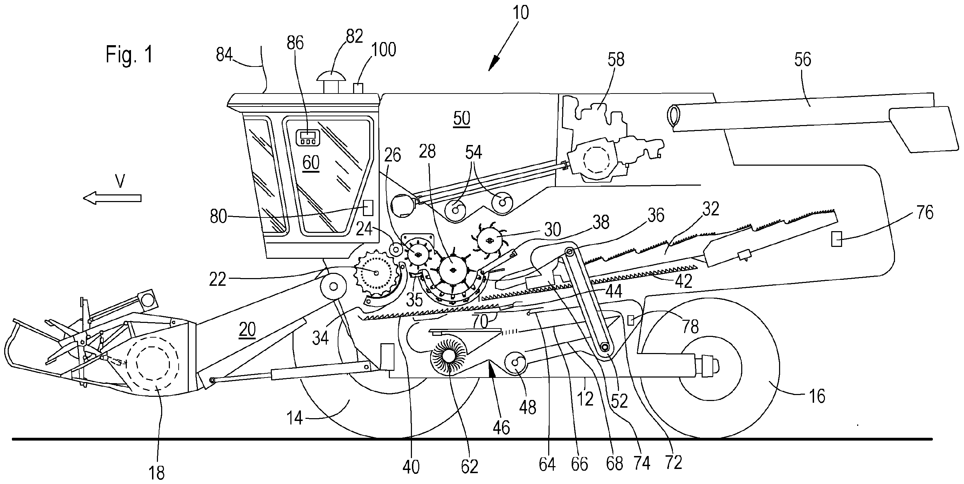

Die Figur 1 zeigt einen selbstfahrenden Mähdrescher 10 mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb.

An den vorderen Endbereich des Mähdreschers 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Unterhalb des Mehrtrommeldreschwerks befindet sich ein vorderer Förderboden 40, der im Betrieb in eine abwechselnd nach vorn und hinten gerichtete Schwingbewegung durchführt. Ein hinterer Förderboden 42 ist unterhalb des Strohschüttlers 32 angeordnet und vollführt im Betrieb ebenfalls eine abwechselnd nach hinten und vorn gerichtete Schwingbewegung. Der vordere Förderboden 40 transportiert das durch den Dreschkorb 34 und durch den Tangentialseparator 36 nach unten hindurch tretende Gemisch aus Korn und Spreu nach hinten, während der hintere Förderboden 42 das durch den Strohschüttler 32 hindurch strömende Gemisch aus Korn und Spreu nach vorn transportiert. Der hintere Förderboden 42 übergibt sein Gemisch an seinem vorderen Ende an den vorderen Förderboden 40, der es durch einen rückwärtigen Fingerrechen 44 nach unten abgibt. Das vom vorderen Förderboden 40 abgegebene Gemisch gelangt dann auf ein Vorsieb 70 und vom Vorsieb 70 auf ein Obersieb 64 einer Reinigungseinrichtung 46.

Die Reinigungseinrichtung 46 umfasst ein Gebläse 62, das das Obersieb 64 und ein Untersieb 66 von unten her mit einem Luftstrom beaufschlagt. Durch das Untersieb 66 nach unten hindurch fallendes Korn wird durch einen Förderboden 68 einer Körnerschnecke 48 zugeführt, die es einem nicht gezeigten Elevator zugeführt, der es in einen Korntank 50 befördert. Eine Überkehrschnecke 52 führt die im Wesentlichen aus unausgedroschene Ährenteilen bestehende Überkehr, die am hinteren Ende des Untersiebs 66 nach unten fällt, zusammen und gibt sie einem Überkehrelevator 72 auf, der sie einem Nachdrescher 74 zuführt.

Die am rückwärtigen Ende des Obersiebs 64 abgegebene Spreu kann an der Rückseite der Siebeinrichtung durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist.

Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren ersetzt werden. Es ist aber auch denkbar, einen rotierenden Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Unterhalb des rückwärtigen Endes des Strohschüttlers 32 ist ein erster Verlustkornsensor 76 angeordnet, der eine Prallplatte und einen Schwingungssensor sowie eine damit verbundene Auswertungselektronik umfasst. Der Verlustkornsensor 76 dient zum Nachweis von Verlustkörnern, die am Ende des Strohschüttlers 32 auf das Feld abgegeben werden. Diese verursachen beim Aufprall auf die Prallplatte Geräusche, die durch den Schwingungssensor erfasst und durch die Auswertungselektronik erkannt werden. Ein zweiter Verlustkornsensor 78 ist am rückwärtigen Ende der Reinigungseinrichtung 46 angebracht und mit dem ersten Verlustkornsensor 76 baugleich oder - ähnlich. Der zweite Verlustkornsensor 78 erfasst Verlustkörner, die am Ende der Reinigungseinrichtung 46 auf das Feld abgegeben werden.

Die Verlustkornsensoren 76, 78 sind mit einer als Bordcomputer dienenden Verarbeitungseinheit 80 verbunden, die weiterhin mit einer Positionsbestimmungseinrichtung 82 in Form einer Antenne und einer Empfangs- und Auswertungseinrichtung zum Empfang von Signalen eines satellitenbasierten und ggf. durch lokale Referenzstationen genauigkeitsverbesserten Positionsbestimmungssystems (GPS, Galileo, Glonass o.ä.), einer Sende- und Empfangseinrichtung 84 für Radiowellen mit einer Antenne und einer Bedienereingabeschnittstelle 86 mit einer Anzeigeeinheit verbunden ist.

Zur Realisierung der erfindungsgemäßen Vorgehensweise ist weiterhin ein tragbares, in einer oder beiden Händen des Bedieners haltbares Handgerät 88 vorgesehen, das innerhalb eines Gehäuses eine Prozessoreinheit 90, eine mit der Prozessoreinheit 90 verbundene berührungsempfindliche Anzeige 92, eine mit der Prozessoreinheit 90 verbundene Positionsbestimmungseinrichtung 94 in Form einer Antenne und einer Empfangs- und Auswertungseinrichtung zum Empfang von Signalen eines satellitenbasierten und ggf. durch lokale Referenzstationen genauigkeitsverbesserten Positionsbestimmungssystems (GPS, Galileo, Glonass o.ä.), eine mit der Prozessoreinheit 90 verbundene elektronische Digital-Kamera 96 sowie eine mit der Prozessoreinheit 90 verbundene Sende- und Empfangseinrichtung 98 für Radiowellen mit einer Antenne umfasst. Derartige Handgeräte 88 sind als so genannte Smartphones oder Tablet-Computer kommerziell verfügbar. Es könnte sich jedoch auch um ein speziell für den vorliegenden Anwendungsfall konstruiertes Gerät handeln. Die Software für die Prozessoreinheit 90 kann als so genannte app aus dem Internet herunter geladen werden.

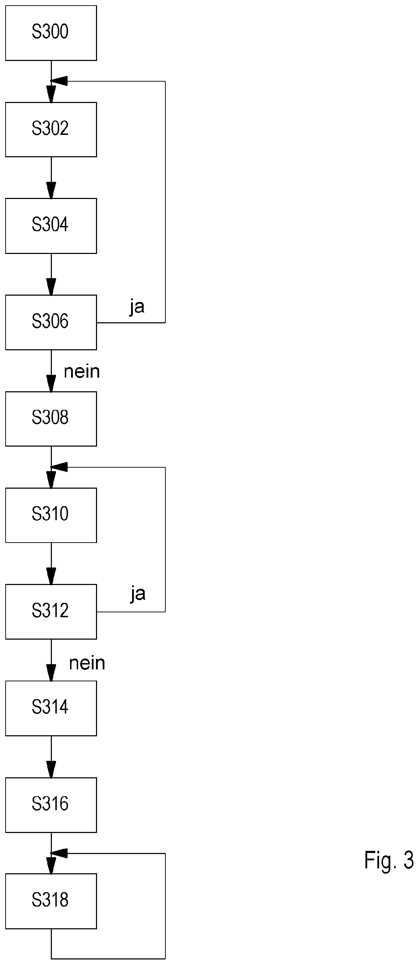

Die Figur 3 zeigt ein Flussdiagramm, nach dem eine erfindungsgemäße Kalibrierung der Verlustkornsensoren 76, 78 es Mähdreschers 10 erfolgt. Das Verfahren der Figur 3 wird vorzugsweise zu Beginn des Erntebetriebs durchgeführt und kann während des Tags ein- oder mehrfach wiederholt werden. Nach dem Start im Schritt S300 folgt der Schritt S302, in welchem der Mähdrescher 10 mit zumindest etwa konstanter Geschwindigkeit und/oder konstantem Durchsatz über ein abzuerntendes Feld gefahren und Erntegut aufgenommen und im Mähdrescher 10 verarbeitet wird. Die Geschwindigkeit kann hierbei durch den Bediener in der Kabine 60 mittels eines Fahrhebels vorgegeben werden. Bei hinreichend homogenen Beständen ist dann der Durchsatz durch den Mähdrescher ebenfalls nahezu konstant. Es besteht auch die Möglichkeit, den Durchsatz mittels eines Sensors zu erfassen, der beispielsweise die Schichthöhe im Schrägförderer 20 oder das Antriebsmoment der Dreschtrommel 22 erfasst und durch die Verarbeitungseinheit 80 selbsttätig die Vortriebsgeschwindigkeit des Mähdreschers 10 auf einen konstanten Durchsatz zu regeln, indem eine Verstellpumpe im hydrostatischen Antrieb der Räder 14 elektromechanisch verstellt wird. Dieser Schritt S302 wird zumindest solange durchlaufen, bis sich ein Verarbeitungsprozess des Mähdreschers stabilisiert hat, d.h. die in der Dresch-und Trenneinrichtung sowie in der Reinigungseinrichtung 46 verarbeiteten Gutmengen zeitlich hinreichend konstant sind. Der Mähdrescher 10 wird somit mit einem bestimmten Durchsatz beaufschlagt. Dieser Durchsatz wird in der Regel auch mit den beschriebenen Sensoren gemessen und registriert, um relative Kornverluste bestimmen zu können.

Es folgt dann der Schritt S304, in welchem Daten hinsichtlich wenigstens eines Sensorwerts für einen Parameter des Verarbeitungsprozesses im Mähdrescher 10 und der zugehörigen Position des Mähdreschers 10 in der Verarbeitungseinheit 80 erfasst und abgespeichert werden. Bei diesen Sensorwerten handelt es sich um die von den Kornverlustsensoren 76, 78 gelieferten Verlustwerte. Zusätzlich kann der mit dem bezüglich des Schritts S302 diskutierte Durchsatz des Mähdreschers 10 abgespeichert werden. Die Daten hinsichtlich der Position werden durch die Positionsbestimmungseinrichtung 82 bereitgestellt. Im Schritt S304 wird somit einer abgespeicherten Position zumindest ein Sensorwert zugeordnet und abgespeichert, der an der abgespeicherten Position gewonnen wurde.

Im folgenden Schritt S306 folgt eine Abfrage, ob die Schritte S302 und S304 bei einer anderen Geschwindigkeit wiederholt werden sollen. Ist das der Fall, werden die Schritte S302 und S304 noch einmal, jedoch bei einer anderen Vortriebsgeschwindigkeit und somit einem anderen Durchsatz des Mähdreschers 10 wiederholt. Anderenfalls folgt der Schritt S308, in welchem Daten für alle in den vorhergehenden Durchläufen des Schritts S304 abgespeicherten Positionen von der Verarbeitungseinheit 80 drahtlos über die Sende- und Empfangseinrichtung und die Antenne 84 und über die Sende- und Empfangseinrichtung 98 des Handgeräts 88 auf die Prozessoreinheit 90 des Handgeräts 88 übertragen werden. Dabei kann ein beliebiges Protokoll verwendet werden, sei es ein Bluetooth- oder WLAN-Protokoll oder eine Telefonverbindung nach dem GSM-oder UMTS-Standard insbesondere unter Zwischenschaltung einer Sende- und Empfangsstation eines Telekommunikationsunternehmens.

Im Schritt S310 wird nun auf der Anzeige 92 des Handgeräts 88 eine erste, im Schritt S308 erhaltene Position angezeigt, an welcher ein Foto des Feldbodens mit der Kamera 96 aufzunehmen ist. Dazu kann eine Karte angezeigt werden, auf der die derzeitige Position des Handgeräts 88, die durch die Positionsbestimmungseinrichtung 94 bereitgestellt wird, und die einzunehmende Position angezeigt werden. Bei einer einfacheren Ausführungsform kann auf der Anzeige lediglich ein Pfeil angezeigt werden, der dem Bediener (bei dem es sich um den Fahrer des Mähdreschers 10 oder um eine Hilfsperson handeln kann) des Handgeräts 88 anzeigt, in welche Richtung er gehen muss, um zur gewünschten Position zu gelangen. Bei Erreichen der Position wird eine Bestätigung angezeigt und der Bediener aufgefordert, die Kamera 96 an dieser Stelle auf den Feldboden auszurichten und einen Auslöseknopf zu drücken. Die Auslösung kann auch automatisch durch einen Neigungssensor erfolgen, der ein hinreichend horizontal gehaltenes Handgerät 88 detektiert. Außerdem kann die Auslösung blockiert werden, solange die gewünschte Position noch nicht erreicht ist. Anschließend liegen der Prozessoreinheit 90 des Handgeräts 88 von der Kamera 96 Bilddaten von der gewünschten Position vor, die positionsreferenziert abgespeichert werden.

Im Schritt S312 wird abgefragt, ob noch Bilder an anderen Positionen aufzunehmen sind. Ist das der Fall, folgt wieder der Schritt S310 für die nächste Position, anderenfalls der Schritt S314.

Im Schritt S314 wird das im Schritt S310 bearbeitete Bild bearbeitet, um eine Eigenschaft des Bildes zu bestimmen. Diese Eigenschaft ist die Anzahl der Verlustkörner auf einer vorbestimmten Fläche des Feldes. Der Schritt S310 kann komplett selbsttätig durch ein Bildverarbeitungssystem der Verarbeitungseinheit 80 durchgeführt werden, wozu die Bilddaten (positionsreferenziert) analog dem Schritt S308 vom Prozessor 90 des Handgeräts 88 über die Sende- und Empfangseinrichtung 98 des Handgeräts 88 und die mähdrescherseitige Sende- und Empfangseinrichtung 84 und deren Antenne auf die Verarbeitungseinheit 80 übertragen werden. Es wäre auch denkbar, das Bild an einen anderen, stationären Rechner zu übersenden, der sein Ergebnis an die Verarbeitungseinheit 80 überträgt. Bei einer anderen Ausführungsform erfolgt der Schritt S314 im Handgerät 88, indem das aufgenommene Bild auf der Anzeige 92 angezeigt wird und der Bediener mit einem Stift o.ä. auf der berührungsempfindlichen Anzeige 92 die im Bild enthaltenen Verlustkörner markiert. Zur Vereinfachung und Vermeidung von Doppeleingaben und nicht erfassten Verlustkörnern können markierte Verlustkörner im angezeigten Bild durch die Prozessoreinheit 90 farbig unterlegt werden. Wenn die Markierung abgeschlossen ist, wird die Anzahl der Verlustkörner auf dem in diesem Absatz beschriebenen Weg positionsreferenziert an die Verarbeitungseinheit 80 übersandt. Wurde der Schritt S310 mehrmals durchlaufen, wird auch der Schritt S312 für jedes Bild separat durchgeführt, sei es direkt nach jedem Schritt S310 oder erst, nachdem der Schritt S310 zu letzten Mal durchlaufen wurde.

Im Schritt S314 ist sicherzustellen, dass eine definierte Fläche am Boden ausgewertet wird, um die Anzahl der Verlustkörner je Flächeneinheit zu bestimmen. Dazu kann ein Aufnahmemaßstab erfasst werden, indem z.B. der Abstand zwischen der Kamera 96 und dem Feldboden aus einem Autofokussystem der Kamera 96 durch die Verarbeitungseinheit 80 oder die Prozessoreinheit 90 übernommen und gemeinsam mit der jeweils verwendeten Brennweite des Objektivs der Kamera 96 zu dem erwähnten Zweck verwendet wird, oder es wird dazu ein Merkmal im aufgenommenen Bild (z.B. ein bestimmter Gegenstand bekannter Abmessung, wie ein Würfel o.ä.) mit fotografiert und ausgewertet. Die Anzahl der Verlustkörner je Flächeneinheit kann dann auf den Ertrag (am Halm vorhandene Körner je Flächeneinheit, die insbesondere mit dem Durchsatzsensor gemessen wird) normiert werden, um die relativen Verluste zu bestimmen. Die vorliegende Erfindung kann auch mit einer Prüfschalenmessung kombiniert werden, indem die Menge an Körnern in einer vom Mähdrescher im Schritt 304 abgeworfenen Prüfschale mittels der Kamera 96 fotografiert und durch die Verarbeitungseinheit 80 oder die Prozessoreinheit 90 bestimmt wird. Falls die Kamera 96 nicht funktionieren sollte, kann die Person die Verlustkörneranzahl an der auszuwertenden Stelle des Felds notfalls zählen und von Hand in das Handgerät 88 eingeben.

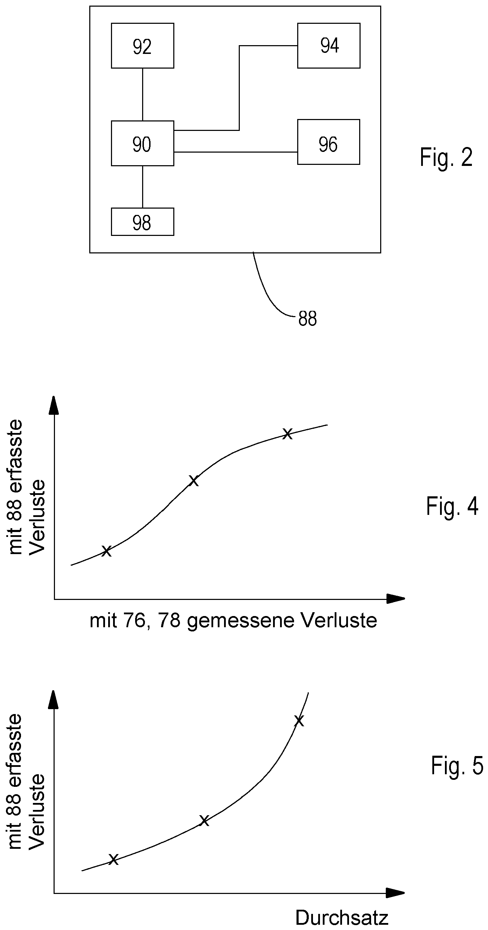

Im folgenden Schritt S316 liegt dem Bordcomputer 90 nunmehr eine Information über die Werte der Verlustsensoren 76, 78 und die zugehörige Anzahl der Verlustkörner je Flächeneinheit sowie optional hinsichtlich des zugehörigen Durchsatzes vor. Die Anzahl der Verlustkörner je Flächeneinheit wird zweckmäßigerweise unter Zuhilfenahme des gemessenen Durchsatzes in einen relativen, auf den (Massen- oder Volumen-) Durchsatz bezogenen Verlustwert umgerechnet, der in Prozent angegeben werden kann. Hierbei wird in der Regel auch die Schnittbreite der Erntegutbergungsvorrichtung 18 des Mähdreschers 10 berücksichtigt. Man erhält somit einen oder mehrere Messpunkte, wie sie in der Figur 4 gezeigt werden, in der auf der X-Achse die durch die Verlustkornsensoren 76, 78 gemessenen Verluste und auf der Y-Achse die mit dem Handgerät 88 erfassten Verluste durch Kreuze angezeigt sind. Im Schritt S316 wird anhand des Sensorwerts (Verlustkornsensoren 76, 78) und der Eigenschaft (Verlustkörner im Bild) ein Kalibrierwert erzeugt, bei dem es sich insbesondere um eine Kalibrierkurve handeln kann, wie in der Figur 4 dargestellt. Es besteht auch die Möglichkeit, eine analoge Kurve aufzustellen, die auf der X-Achse den gemessenen Durchsatz und auf der Y-Achse die mit dem Handgerät 88 erfassten Verluste beinhaltet, wie sie in der Figur 5 dargestellt ist.

Im Schritt S316 kann zusätzlich die spezifische Kornmasse (Tausendkornmasse) der jeweiligen Erntegutart berücksichtigt werden, um die Anzahl der Körner unter Berücksichtigung des massebezogenen Ertrags, der durch einen Durchsatzsensor erfasst werden kann, in einen relativen Verlustkornanteil (in Prozenten gemessen) umzurechnen. Diese Tausendkornmasse kann für die jeweilige Erntegutart aus einer im Handgerät 88 abgespeicherten Tabelle entnommen werden, wobei die Auswahl durch den Bediener anhand der im mit der Kamera 96 aufgenommenen Foto angezeigten Korngröße im Vergleich mit einer Maske, in der verschiedende Korngrößen auf der Anzeige 92 wiedergegeben werden, erfolgen kann. Es besteht aber auch die Möglichkeit, die Tausendkornmasse durch die Verarbeitungseinheit 80 oder die Prozessoreinheit 90 direkt aus dem von der Kamera 96 erstellten Bild abzuleiten.

Die Kalibrierkurve der Figur 4 wird dann im Schritt S318 im weiteren Betrieb des Mähdreschers 10 dazu verwendet, anhand nun aktuell erfasster Werte der Verlustsensoren 76, 78 zunächst einen korrekten (kalibrierten) Betriebswert des Mähdreschers, nämlich den Verlustwert, zu berechnen und auf der Anzeigeeinheit der Bedienerschnittstelle 86 anzuzeigen.

Außerdem kann der korrekte Verlustwert zur selbsttätigen Einstellung eines Betriebswerts des Mähdreschers 10 dienen, insbesondere um die Vortriebsgeschwindigkeit derart vorzugeben, dass ein gewünschter Verlustwert eingehalten wird. Dazu können entweder die Verluste mit den Kornverlustsensoren 76, 78 erfasst, anhand der Kurve der Figur 4 korrigiert und mit einem Sollwert verglichen werden, um die Vortriebsgeschwindigkeit selbsttätig einzustellen, oder die Kalibrierkurve gemäß der Figur 5 wird verwendet, um den Durchsatz bzw. die Vortriebsgeschwindigkeit derart vorzugeben, dass ein gewünschter Verlustwert eingehalten wird.

Anzumerken ist, dass verschiedene Änderungen und Verfeinerungen der Vorgehensweise der Figur 3 möglich sind. So können im Schritt S318 die Messwerte eines zusätzlichen Sensors zur Erfassung von einer Umgebungsgröße (z.B. Luftfeuchtesensor 100 zur Erfassung der relativen oder absoluten Feuchtigkeit der Umgebungsluft) und gelernte oder vorgegebene Auswirkungen der Umgebungsgröße auf die Sensorwerte berücksichtigt werden. Dabei können auch die im Schritt S304 herrschenden Messwerte des zusätzlichen Sensors berücksichtigt werden. Dadurch wird die Genauigkeit des Kalibriervorgangs noch verbessert.

Weiterhin besteht die Möglichkeit, in den Schritten S304 und S318 weitere, die Erfassung des Sensorwerts für den Parameter des Verarbeitungsprozesses im Mähdrescher 10 (d.h. die Kornverlustsensoren 76, 78) beeinflussende Werte sensorisch zu erfassen und durch die Verarbeitungseinheit 80 abzuspeichern. Diese Werte werden im Schritt S316 und/oder S318 unter Berücksichtigung dann aktuell erfasster, korrespondierender Werte kompensierend berücksichtigt. Dazu kann auf im Betrieb des Mähdreschers 10 gelernte oder fest abgespeicherte Zusammenhänge zwischen diesen Werten und den Sensorwerten zurückgegriffen werden. Die erwähnten Werte betreffen insbesondere die Neigung des Mähdreschers 10 in Vorwärts- und/oder seitlicher Richtung, Arbeitsparameter der Reinigungseinrichtung 46, Flussraten an Korn und/oder Kaff, die Kornfeuchtigkeit und/oder die Förderrate an Nicht-Kornbestandteilen in einem Elevator zwischen der Körnerschnecke 48 und dem Korntank 50. Einen wichtigen Einfluss auf die Messergebnisse der Kornverlustsensoren 76, 78 hat das Verhältnis zwischen Korn und Stroh. Somit kann der Korndurchsatz z.B. im Elevator zwischen der Körnerschnecke 48 und dem Korntank 50 gemessen werden und eine im Schrägförderer 20 erfasste Schichthöhe oder ein Antriebsmoment im Dreschwerk repräsentieren den Strohdurchsatz. Bei den Messungen sollten beide zur Messung des Korn- und Strohdurchsatz erfassten Größen möglichst konstant sein. Anhand des im Schritt S304 und des im Schritt S318 gemessenen Verhältnisses zwischen Korn- und Strohdurchsatz kann dann die Genauigkeit des gemessenen Verlustwerts verbessert werden.

### Beschriftungen der Schritte der Figur 3

S300 Start
S302 Fahren des Mähdreschers über ein Feld mit zumindest etwa konstanter Geschwindigkeit und/oder konstantem Durchsatz, zumindest bis sich ein Verarbeitungsprozess des Mähdreschers stabilisiert hat.
S304 Erfassen und Abspeichern von Daten hinsichtlich wenigstens eines Sensorwerts für einen Parameter des Verarbeitungsprozesses im Mähdrescher und der zugehörigen Position des Mähdreschers in einer Verarbeitungseinheit.
S306 andere Geschwindigkeit?
S308 Übertragen der Daten hinsichtlich der Position auf das Handgerät.
S310 Anzeige der Position auf dem Handgerät und Aufnahme eines Bildes des Feldbodens an der Position mit der Kamera;
S312 weitere Bilder aufnehmen?
S314 Bearbeiten des Bildes, um eine Eigenschaft des Bildes zu bestimmen.
S316 Bestimmen eines Kalibrierwerts durch die Verarbeitungseinheit anhand des Sensorwerts und der Eigenschaft.
S318 Anzeige eines korrekten Verlustwerts und selbsttätiges Einstellen eines Betriebswerts des Mähdreschers durch die Verarbeitungseinheit anhand aktueller Sensorwerte und des Kalibrierwertes.

## Patentansprüche

1. Verfahren zur Optimierung eines Betriebsparameters eines Mähdreschers (10) mit folgenden Schritten:
(a) Fahren des Mähdreschers (10) über ein Feld mit zumindest etwa konstanter Geschwindigkeit und/oder konstantem Durchsatz, zumindest bis sich ein Verarbeitungsprozess des Mähdreschers (10) stabilisiert hat;
(b) Erfassen und Abspeichern von Daten hinsichtlich wenigstens eines Sensorwerts für einen Parameter des Verarbeitungsprozesses im Mähdrescher (10) und der zugehörigen Position des Mähdreschers (10) in einer Verarbeitungseinheit (80);
(c) Übertragen der Daten hinsichtlich der Position auf ein mit einer Kamera (96) und einer Positionsbestimmungseinrichtung (94) ausgestattetes Handgerät (88);
(d) Verbringen des Handgeräts (88) an die Position und Aufnahme eines Bildes des Feldbodens mit der Kamera (86);
(e) Bearbeiten des Bildes, um eine Eigenschaft des Bildes zu bestimmen;
(f) Bestimmen eines Kalibrierwerts durch die Verarbeitungseinheit (80) anhand des Sensorwerts und der Eigenschaft;
(g) und Bestimmen und Anzeigen und/oder selbsttätiges Einstellen eines Betriebswerts des Mähdreschers (10) durch die Verarbeitungseinheit (80) anhand aktueller Sensorwerte und des Kalibrierwertes, wobei der Betriebswert der im Betrieb einstellbare Betriebsparameter des Mähdreschers (10) ist oder der angezeigte Betriebswert ein Ergebnis des Betriebs des Mähdreschers (10) repräsentiert und durch den Bediener zur Einstellung des Betriebsparameters verwendbar ist.

2. Verfahren nach Anspruch 1, wobei die Schritte (a) bis (f) jeweils bei unterschiedlichen Geschwindigkeiten und/oder Durchsätzen wiederholt werden.

3. Verfahren nach Anspruch 1 oder 2, wobei der Sensorwert sich auf Körnerverluste und/oder den Durchsatz des Mähdreschers (10) bezieht und die Eigenschaft des Bildes die Anzahl an Verlustkörnern auf einer bestimmten Fläche des Feldes ist.

4. Verfahren nach einem der Ansprüche 1 bis 3, wobei der Schritt (e) im Handgerät (88) oder in der Verarbeitungseinheit (80) stattfindet.

5. Verfahren nach einem der Ansprüche 1 bis 4, wobei der Schritt (e) komplett selbsttätig oder unter Einbeziehung von Bedienereingaben stattfindet.

6. Verfahren nach Anspruch 5, wobei im Schritt (e) ein Bediener auf einer berührungsempfindlichen Anzeige (92) des Handgeräts bzw. der Verarbeitungseinheit relevante Bildteile (insbesondere Verlustkörner) markieren kann und die Anzahl der Markierungen gezählt wird.

7. Verfahren nach einem der Ansprüche 1 bis 6, wobei im Schritt (g) die Messwerte eines zusätzlichen Sensors (100) zur Erfassung von einer Umgebungsgröße und gelernte oder vorgegebene Auswirkungen der Umgebungsgröße auf die Sensorwerte berücksichtigt werden.

8. Verfahren nach einem der Ansprüche 1 bis 7, wobei in den Schritten (b) und (g) weitere, die Erfassung des Sensorwerts für den Parameter des Verarbeitungsprozesses im Mähdrescher (10) beeinflussende Werte sensorisch erfasst und abgespeichert werden, und wobei diese Werte im Schritt (f) und/oder (g) unter Berücksichtigung dann aktuell erfasster, korrespondierender Werte kompensierend berücksichtigt werden, wozu auf im Betrieb des Mähdreschers (10) gelernte oder fest abgespeicherte Zusammenhänge zwischen diesen Werten und den Sensorwerten zurückgegriffen wird.

9. Verfahren nach Anspruch 8, wobei die Werte die Neigung des Mähdreschers (10) in Vorwärts- und/oder seitlicher Richtung, Arbeitsparameter einer Reinigungseinrichtung (46), Flussraten an Korn und/oder Kaff, die Kornfeuchtigkeit und/oder die Förderrate an Nicht-Kornbestandteilen in einem Elevator zwischen einer Körnerschnecke (48) und einem Korntank (50) betreffen.

10. Verfahren nach einem der vorhergehenden Ansprüche, wobei der Betriebswert die Geschwindigkeit oder den Durchsatz oder die Verluste des Mähdreschers (10) repräsentiert.

11. Anordnung zur Optimierung eines Betriebsparameters eines Mähdreschers (10), mit einem Mähdrescher (10), der einen Sensor (76, 78) zur Erfassung eines Parameters des Verarbeitungsprozesses im Mähdrescher (10), eine Positionsbestimmungseinrichtung (82) zur Bestimmung der Position des Mähdreschers (10), eine mit dem Sensor (76, 78) und der Positionsbestimmungseinrichtung (82) verbundene Verarbeitungseinheit (80) sowie eine Sende- und Empfangseinrichtung (84) umfasst, sowie mit einem Handgerät (88), das eine Sende- und Empfangseinrichtung (98), eine Positionsbestimmungseinrichtung (94) und eine Kamera (96) aufweist, wobei der Mähdrescher (10) und das Handgerät (88) betreibbar sind, ein Verfahren nach einem der vorhergehenden Ansprüche durchzuführen.

## Claims

1. Method for optimising an operating parameter of a combine harvester (10), comprising the following steps:
(a) driving the combine harvester (10) over a field at an at least approximately constant speed and/or constant throughput, at least until a processing procedure of the combine harvester (10) has stabilized;
(b) acquiring and storing in a processing unit (80) data with regard to at least one sensor value for a parameter of the processing procedure in the combine harvester (10) and the associated position of the combine harvester (10);
(c) transmitting the data with regard to the position to a handheld device (88) equipped with a camera (96) and a position determining device (94) ;
(d) moving the handheld device (88) to the position and recording an image of the field ground with the camera (86);
(e) processing the image in order to determine a property of the image;
(f) determining a calibration value by means of the processing unit (80) by using the sensor value and the property;
(g) and determining and displaying and/or automatically adjusting an operating value of the combine harvester (10) by means of the processing unit (80) by using current sensor values and the calibration value, wherein the operating value is the operating parameter of the combine harvester (10) that is adjustable during operation, or the displayed operating value represents a result of the operation of the combine harvester (10) and can be used by the operator to adjust the operating parameter.

2. Method according to Claim 1, wherein steps (a) to (f) are each repeated for different speeds and/or throughputs.

3. Method according to Claim 1 or 2, wherein the sensor value relates to grain losses and/or the throughput of the combine harvester (10), and the property of the image is the number of lost grains on a specific area of the field.

4. Method according to one of Claims 1 to 3, wherein step (e) takes place in the handheld device (88) or in the processing unit (80).

5. Method according to one of Claims 1 to 4, wherein step (e) takes place completely automatically or with the incorporation of operating entries.

6. Method according to Claim 5, wherein in step (e) an operator is able to mark relevant image parts (in particular lost grain) on a touch sensitive display (92) of the handheld device or the processing unit, and the number of marks is counted.

7. Method according to one of Claims 1 to 6, wherein in step (g) the measured values from an additional sensor (100) for acquiring an environmental variable and learned or predefined effects of the environment variable on the sensor values are taken into account.

8. Method according to one of Claims 1 to 7, wherein in steps (b) and (g) further values influencing the acquisition of the sensor value for the parameter of the processing procedure in the combine harvester (10) are acquired by sensors and are stored, and wherein these values are taken into account in a compensatory manner in step (f) and/or (g), whilst taking into account corresponding values then currently acquired, for which purpose recourse is had to relationships between these values and the sensor values which are learned during the operation of the combine harvester (10) or permanently stored.

9. Method according to Claim 8, wherein the values relate to the inclination of the combine harvester (10) in the forward and/or lateral direction, working parameters of a cleaning device (46), flow rates of grain and/or chaff, the grain moisture content and/or the delivery rate of non-grain constituents in an elevator between a grain auger (48) and a grain tank (50).

10. Method according to one of the preceding claims, wherein the operating value represents the speed or the throughput or the losses of the combine harvester (10).

11. Arrangement for optimising an operating parameter of a combine harvester (10), having a combine harvester (10) which comprises a sensor (76, 78) for acquiring a parameter of the processing procedure in the combine harvester (10), a position determining device (82) for determining the position of the combine harvester (10), a processing unit (80) connected to the sensor (76, 78) and the position determining device (82) and a transmitting and receiving device (84), and comprising a handheld device (88) which has a transmitting and receiving device (98), a position determining device (94) and a camera (96), wherein the combine harvester (10) and the handheld device (88) can be operated in order to carry out a method according to one of the preceding claims.

## Revendications

1. Procédé d'optimisation d'un paramètre de fonctionnement d'une moissonneuse-batteuse (10), le procédé comprenant les étapes suivantes :
(a) entraîner la moissonneuse-batteuse (10) sur un champ à vitesse au moins à peu près constante et/ou à rendement au moins à peu près constant, au moins jusqu'à ce qu'un processus de traitement de la moissonneuse-batteuse (10) se soit stabilisé ;
(b) acquérir et mémoriser des données, concernant au moins une valeur de capteur pour un paramètre du processus de traitement dans la moissonneuse-batteuse (10) et la position associée de la moissonneuse-batteuse (10), dans une unité de traitement (80) ;
(c) transmettre les données de position à un dispositif portatif (88) équipé d'une caméra (96) et d'un moyen de détermination de position (94) ;
(d) placer le dispositif portatif (88) à la position et recevoir une image du sol du champ avec la caméra (86) ;
(e) traiter l'image pour déterminer une propriété de l'image ;
(f) déterminer une valeur d'étalonnage à l'aide de l'unité de traitement (80) sur la base de la valeur de capteur et de la propriété ;
(g) et déterminer et afficher et/ou régler automatiquement une valeur de fonctionnement de la moissonneuse-batteuse (10) à l'aide de l'unité de traitement (80) sur la base de valeurs de capteur actuelles et de la valeur d'étalonnage, la valeur de fonctionnement étant le paramètre de fonctionnement, réglable en fonctionnement, de la moissonneuse-batteuse (10) ou la valeur de fonctionnement affichée représentant un résultat du fonctionnement de la moissonneuse-batteuse (10) et pouvant être utilisée par l'opérateur pour régler le paramètre de fonctionnement.

2. Procédé selon la revendication 1, les étapes (a) à (f) étant répétées à des vitesses différentes et/ou des rendements différents.

3. Procédé selon la revendication 1 ou 2, la valeur de capteur concernant des pertes de grain et/ou le rendement de la moissonneuse-batteuse (10) et la propriété de l'image étant le nombre de grains perdus sur une surface donnée du champ.

4. Procédé selon l'une des revendications 1 à 3, l'étape (e) étant réalisée dans le dispositif portatif (88) ou dans l'unité de traitement (80).

5. Procédé selon l'une des revendications 1 à 4, l'étape (e) étant réalisée de manière totalement automatique ou avec la participation d'entrées d'opérateur.

6. Procédé selon la revendication 5, à l'étape (e), un opérateur pouvant repérer, sur un afficheur tactile (92) du dispositif portatif ou de l'unité de traitement, des parties d'image pertinentes (en particulier des grains perdus) et le nombre de repères étant compté.

7. Procédé selon l'une des revendications 1 à 6, à l'étape (g), les valeurs de mesure d'un capteur supplémentaire (100) étant prises en compte pour détecter une grandeurs d'environnement et les effets appris ou prédéterminés de la grandeur d'environnement sur les valeurs de capteur.

8. Procédé selon l'une des revendications 1 à 7, aux étapes (b) et (g), d'autres valeurs qui influent sur la détection de la valeur de capteur pour le paramètre du processus de traitement dans la moissonneuse-batteuse (10) étant détectées par des capteurs et mémorisées, et ces valeurs étant prise en compte de manière compensatrice à l'étape (f) et/ou (g) avec prises en compte de valeurs correspondantes alors actuellement détectées, ce pour quoi des relations apprises ou mémorisées de manière permanente entre ces valeurs et les valeurs de capteur sont utilisées pendant le fonctionnement de la moissonneuse-batteuse (10).

9. Procédé selon la revendication 8, les valeurs comprenant l'inclinaison de la moissonneuse-batteuse (10) dans les directions avant et/ou latérale, les paramètres de fonctionnement d'un épurateur (46), les débits de grain et/ou de menue paille, l'humidité du grain et/ou la vitesse de transport des constituants autres que le grain dans un élévateur entre une vis à grains (48) et un réservoir à grains (50).

10. Procédé selon l'une des revendications précédentes, la valeur de fonctionnement représentant la vitesse ou le rendement ou les pertes de la moissonneuse-batteuse (10).

11. Ensemble d'optimisation d'un paramètre de fonctionnement d'une moissonneuse-batteuse (10), l'ensemble comprenant une moissonneuse batteuse (10) munie d'un capteur (76, 78) destiné à détecter un paramètre du processus de traitement dans la moissonneuse-batteuse (10), un moyen de détermination de position (82) destiné à déterminer la position de la moissonneuse-batteuse (10), une unité de traitement (80) reliée au capteur (76, 78) et au moyen de détermination de position (82) et un moyen d'émission et de réception (84), et un dispositif portatif (88) qui comporte un moyen d'émission et de réception (98), un moyen de détermination de position (94) et une caméra (96), la moissonneuse-batteuse (10) et le dispositif portatif (88) pouvant être utilisés pour mettre en œuvre un procédé selon l'une des revendications précédentes.
